# EUROPÄISCHE PATENTSCHRIFT

(11) **EP 1 846 975 B1**
(45) Veröffentlichungstag und Bekanntmachung des Hinweises auf die Patenterteilung: **07.12.2011**
(21) Anmeldenummer: 06707942.6
(22) Anmeldetag: 01.02.2006
(51) Int. Cl.: H01M 8/10, H01M 8/02

(54) **VERFAHREN UND VORRICHTUNG ZUR DAUERHAFTEN VERBINDUNG EINER POLYMER-ELEKTROLYT-MEMBRAN MIT ZUMINDEST EINER GASDIFFUSIONSELEKTRODE**
METHOD AND DEVICE FOR PERMANENTLY CONNECTING A POLYMER ELECTROLYTE TO AT LEAST ONE GAS DIFFUSION ELECTRODE
PROCEDE ET DISPOSITIF PUR ASSEMBLER DE MANIERE DURABLE UNE MEMBRANE POLYMERE-ELECTROLYTE ET AU MOINS UNE ELECTRODE DE SEPARATION PAR DIFFUSION GAZEUSE

(30) Priorität: 07.02.2005 EP 05002510
(43) Veröffentlichungstag der Anmeldung: 24.10.2007
(73) Patentinhaber: SIEMENS AKTIENGESELLSCHAFT, 80333 München (DE)
(72) Erfinder: HERMANNS, Margarete, 91058 Erlangen (DE)
(86) Internationale Anmeldenummer: PCT/EP2006/050577
(87) Internationale Veröffentlichungsnummer: WO 2006/082195

(56) Entgegenhaltungen:
- FR-A- 2 224 206
- US-A- 5 534 362
- US-A1- 2003 059 661
- US-B1- 6 200 698
- PATENT ABSTRACTS OF JAPAN Bd. 011, Nr. 083 (E-489), 13. März 1987 (1987-03-13) & JP 61 239568 A (ISHIKAWAJIMA HARIMA HEAVY IND CO LTD), 24. Oktober 1986 (1986-10-24)
- TICIANELLI E A ET AL: "METHODS TO ADVANCE TECHNOLOGY OF PROTON EXCHANGE MEMBRANE FUEL CELLS" JOURNAL OF THE ELECTROCHEMICAL SOCIETY, ELECTROCHEMICAL SOCIETY. MANCHESTER, NEW HAMPSHIRE, US, Bd. 135, Nr. 9, 1. September 1988 (1988-09-01), Seiten 2209-2214, XP000126357 ISSN: 0013-4651 in der Anmeldung erwähnt

## Beschreibung

Die Erfindung betrifft ein Verfahren zur dauerhaften Verbinddung einer Polymer-Elektrolyt-Membran mit zumindest einer Gasdiffusionselektrode gemäß Oberbegriff des Patentanspruchs 1. Ein derartiges Verfahren ist z.B. durch den Aufsatz "Methods to Advance Technology of Proton Exchange Membrane Fuel Cells", E.A: Ticianelli et al, J. Electrochemical Society, Vol. 135 (1988) S. 2209 bekannt. Die Erfindung betrifft ferner eine Vorrichtung zur Durchführung des Verfahrens.

Niedertemperatur-Brennstoffzellen auf Basis der Polymer-Elektrolyt-Membran-(PEM)-Technologie werden als umweltfreundliche und effiziente Energiewandler für portable, mobile und stationäre Anwendungen diskutiert und finden bereits erste kommerzielle Verwendungen. Sie setzen bei Temperaturen bei kurz über dem Gefrierpunkt bis ca. 90°C Wasserstoff und sauerstoff in elektrischen Gleichstrom um, als einziges Nebenprodukt entsteht dabei Wasser.

Eine PEM-Brennstoffzelle weist als Kernstück eine Membran-Elektroden-Einheit (MEA) auf, die aus einer Polymer-Elektrolyt-Membran mit an zwei gegenüberliegenden Seiten jeweils einer Gasdiffusionselektrode und jeweils einer dazwischen angeordneten Elektrokatalysatorschicht (z.B. aus Platin) aufgebaut ist. Die Gasdiffusionselektroden bestehen beispielsweise aus einem festen, gasdurchlässigen und elektrisch leitfähigen Trägermaterial (z.B. Kohlegewebe oder -papiers.

Zwischen der Membran und den Gasdiffusionselektroden muss eine gute dauerhafte Verbindung bestehen, um eine gute Protonenleitfähigkeit zu erzielen. Diese Verbindung erfolgt bisher meist durch Zusammenpressen der Membran und der Elektroden bei Temperaturen von über 100°C in einer Heisspresse. Ein derartiges Verfahren ist z.B. aus dem vorgenannten Aufsatz bekannt.

Hierbei können zum einen in einem einzigen Pressvorgang beide Elektroden gleichzeitig mit der Membran verbunden werden. Alternativ kann auch in einem ersten Pressvorgang eine erste Elektrode mit einer ersten Seite der Membran verbunden werden, und anschließend in einem zweiten Pressvorgang eine zweite Elektrode mit der anderen, gegenüberliegenden Seite der Membran verbunden werden. Die Verbindung erfolgt hierbei jeweils dauerhaft, d.h. die Verbindung bleibt auch nach Wegnahme des Pressdruckes und der gegebenenfalls vorhandenen Presstemperatur für die gesamte Lebenszeit der Membran-Elektroden-Einheit bestehen.

Gemeinsam ist diesen Verfahren, dass das Zusammenpressen der Membran und der zumindest einen Elektrode durch Zusammenpressen zweier unmittelbar die beiden Elektroden bzw. die Elektrode und die Membran berührender Platten einer Presse erfolgt.

Als problematisch erweist sich hierbei, dass diese Platten oftmals nicht exakt parallel ausgerichtet werden können. Es kommt somit zu einer inhomogenen Druckeinwirkung auf die Membran und die Elektrode(n), d.h. zu unterschiedlichen Pressdrücken entlang der Oberfläche der Membran und der Elektrode(n), und somit zu einem inhomogenen Zusammenpressen dieser Komponenten. Der gleiche Effekt tritt bei Unebenheiten im Plattenmaterial, in der Membran oder den Gasdiffusionselektroden auf. Die Folge dieses Effektes sind Verschiebungen der Materialien in der Presse, ungleichmäßige Anpressungen und damit nach Wegnahme des Pressdruckes ungleichmäßige Bindungen zwischen den Elektroden und der Membran bis hin zu Verwerfungen und -zerstörungen des Membran- und Elektrodenmaterials. Hierdurch wird die Protonenleitfähigkeit zwischen der Membran und den Elektroden deutlich verringert.

Die US-A-5534362, US-B1-6200698 und die JP 61239568 A offenbaren Betriebsverfahren für einen Brennstoffzellenstapel, bei denen durch Erhöhung des Drucks eines Fluids der ganze Stapel während des Betriebs der Brennstoffzellen zusammengepresst wird. Diese Verfahren und die zugehörigen Vorrichtungen eignen sich jedoch nicht für die Herstellung von Membran-Elektroden-Einheiten mit einer dauerhaften Verbindung einer Polymer-Elektrolyt-Membran mit einer Gasdiffusionselektrode.

Es ist Aufgabe vorliegender Erfindung, ein Verfahren und eine Vorrichtung zur Durchführung dieses Verfahrens anzugeben, durch die die vorgenannten Probleme vermieden werden können.

Die Lösung der auf das Verfahren gerichteten Aufgabe gelingt erfindungsgemäß durch die Lehre des Patentanspruchs 1. Eine für die Durchführung des Verfahrens geeignete Vorrichtung ist Gegenstand des Patentanspruchs 10.

Bei dem erfindungsgemäßen Verfahren wird die Pressbewegung zum dauerhaften Verbinden der Membran und der Elektrode(n) somit nicht durch Zusammenpressen zweier unmittelbar die Gasdiffusionselektrode und die Membran bzw. die beiden Gasdiffusionselektroden berührender Pressplatten einer Presse erzeugt, sondern die Pressbewegung wird durch die Druckerhöhung eines Fluids erzeugt, das die Membran und/oder die zumindest eine Elektrode unmittelbar oder über ein elastisches Zwischenelement berührt.

In Fluiden, d.h. in Gasen und Flüssigkeiten, pflanzt sich der Druck allseitig gleichmäßig fort. Es wirkt somit entlang der gesamten Oberfläche, an der das Fluid die Membran bzw. die Elektrode(n) unmittelbar oder über ein elastisches Zwischenelement berührt, der jeweils gleiche Druck auf die Membran und die zumindest eine Elektrode, so dass über diese gesamte Oberfläche eine gleichmäßige Pressbewegung erzeugt wird. Hierdurch kann eine sehr homogene dauerhafte Bindung zwischen der Membran und der (den) Elektrode(n) und somit eine gute Protonenleitfähigkeit zwischen diesen Elementen erzielt werden.

Mit Hilfe des elastischen Zwischenelementes kann ein Eindringen des Fluids in die Elektrode(n) und/oder Membran verhindert werden. Von besonderem Vorteil hierbei ist, wenn das elastische Zwischenelement eine derart geringe Härte aufweist, dass es sich unter Druckeinwirkung an größere Unebenheiten der Membran bzw. Elektrode anschmiegen kann. Bevorzugt weist das elastische Zwischenelement deshalb eine Shore Härte A im Bereich von 50 bis 70, vorzugsweise 60 auf. Es liegt hierbei im Rahmen der Erfindung, dass das elastische Zwischenelement auch aus mehreren Einzelelementen aufgebaut sein kann, die auch aus unterschiedlichen Materialen bestehen können. Hierdurch kann das Zwischenelement z.B. an das verwendete Fluid und/oder den verwendeten Elektrolyten angepasst und somit die Abdichtungseigenschaften und die Beständigkeit des Zwischenelementes optimiert werden.

Eine besonders gute dauerhafte Verbindung zwischen der Membran und der zumindest einen Gasdiffusionselektrode ist dadurch möglich, dass die Polymer-Elektrolyt-Membran und die zumindest eine Gasdiffusionselektrode zum Verbinden zusätzlich erwärmt werden.

Gemäß einer besonders vorteilhaften Ausgestaltung der Erfindung erfolgt die Wärmeeinwirkung über das Fluid auf die Membran und die Elektrode(n). Da sich in einem Fluid, insbesondere in einem Gas, die Wärme sehr gut verteilen kann, kann eine gleichmäßige Temperaturverteilung über die Oberflächen der Membran und der Elektrode(n) erzielt werden, wodurch die Homogenität der Verbindung weiter verbessert werden kann. Die Erwärmung kann hierbei unmittelbar vor dem eigentlichen Pressvorgang oder auch erst während des Pressen erfolgen.

Gemäß einer vorteilhaften Ausgestaltung des erfindungsgemäßen Verfahrens erfolgt das Zusammenpressen der Membran und der zumindest einen Gasdiffusionselektrode in einem mit dem Fluid gefüllten Raum, wobei zur Druckerhöhung des Fluids die Menge des Fluids in dem Raum erhöht wird.

Zusätzlich oder alternativ kann zur Druckerhöhung des Fluids das Volumen des Raumes verkleinert werden.

Ebenfalls zusätzlich oder alternativ kann zur Druckerhöhung des Fluids die Temperatur des Fluids in dem Raum erhöht werden.

Eine erfindungsgemäße Vorrichtung zur Durchführung des Verfahrens umfasst einen Raum, in dem eine Membran mit zumindest einer anliegenden Elektrode anordenbar ist und der mit einem Fluid derart befüllbar ist, dass das Fluid die Membran und/ oder die zumindest eine anliegende Elektrode unmittelbar oder über ein elastisches Zwischenelement berührt, wobei zum Zusammenpressen der Membran und der zumindest einen Elektrode der Druck des Fluids in dem Raum erhöhbar ist.

Die Erfindung, sowie weitere vorteilhafte Ausgestaltungen der Erfindung gemäß Merkmalen der Unteransprüche, werden im Folgenden anhand von Ausführungsbeispielen in den Figuren näher erläutert. Einander entsprechende Teile sind in den Figuren hierbei mit jeweils gleichen Bezugszeichen versehen. Es zeigen:
- FIG 1: eine Prinzipdarstellung einer ersten Ausführungsform einer erfindungsgemäßen Vorrichtung,
- FIG 2: eine Prinzipdarstellung einer zweiten Ausführungsform einer erfindungsgemäßen Vorrichtung,
- FIG 3: eine Prinzipdarstellung einer dritten Ausführungsform einer erfindungsgemäßen Vorrichtung,
- FIG 4: eine Explosionsdarstellung einer besonders vorteilhaften erfindungsgemäßen Vorrichtung,
- FIG 5: die Vorrichtung der FIG 4 bei Durchführung des erfindungsgemäßen Verfahrens,
- FIG 6: ein Temperatur/Druck-Zeitdiagramm eines besonders vorteilhaften Verfahrensablaufes.

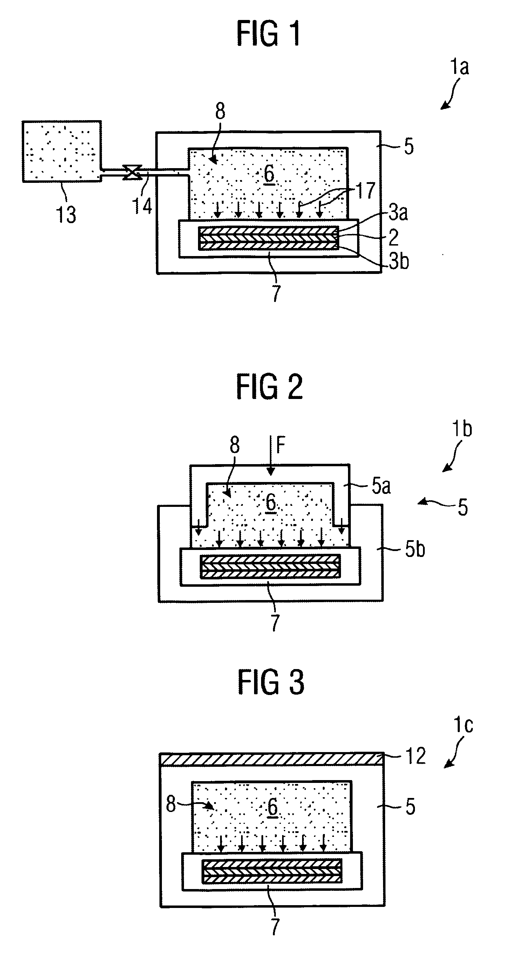

FIG 1 zeigt in einer Prinzipdarstellung eine erste Ausführungsform einer erfindungsgemäßen Vorrichtung 1a zur Verbindung einer Polymer-Elektrolyt-Membran 2 mit beidseitig anliegenden Gasdiffusionselektroden 3a, 3b. Die Vorrichtung 1a umfasst ein Druckgefäß 5 mit einem fluiddicht umschlossenen Innenraum 6, in dem die Membran 2 mit den anliegenden Elektroden 3a, 3b und einem die Membran und die Elektroden 3a, 3b umschließenden elastischen Zwischenelement 7 anordenbar ist. Der Innenraum 6 ist mit einem Fluid 8, wie z.B. Luft, derart befüllbar, dass das Fluid 8 die Gasdiffusionselektrode 3a über das elastische Zwischenelement 7 berührt. Das Zwischenelement 7 ist fluiddicht und verhindert somit ein Eindringen des Fluids 8 in die Elektroden 3a, 3b und die Membran 2.

Die Verbindung der Membran 2 mit den Elektroden 3a, 3b erfolgt durch Zusammenpressen der Membran 2 und der Elektroden 3a, 3b, wobei zum Erzeugen der Pressbewegung der Druck des Fluids 8 in dem Innenraum 6 erhöhbar ist. Diese Druckerhöhung erfolgt durch Vergrößerung der Menge des Fluids 8 in dem Innenraum 6, wozu zusätzliches Fluid über einen Zufuhrkanal 14 aus einem Vorratsbehälter 13 in den Innenraum 6 geleitet werden kann.

In dem Fluid 8 pflanzt sich der Druck allseitig gleichmäßig fort. Es wirkt somit entlang der gesamten Oberfläche der Elektrode 3a der gleiche Druck, so dass über diese gesamte Oberfläche die gleiche Presskraft 17 und somit eine gleichmä-βige Pressbewegung zum Verbinden der Membran 2 und der Elektroden 3a, 3 erzeugt wird.

Bei einer in FIG 2 gezeigten, mit 1b bezeichneten, zweiten Ausführungsform einer erfindungsgemäßen Vorrichtung ist bei gleich bleibender Menge des Fluids in dem Innenraum 6 zur Druckerhöhung das Volumen des Innenraumes 6 verkleinerbar. Das Druckgefäß 7 besteht hierbei z.B. aus einem die Membran 2 und die Elektroden 3a, 3b aufnehmenden feststehenden Teil 5b und einem bezüglich des feststehenden Teils 5b beweglichen Teil 5a. Der bewegliche Teil 5a kann hierbei unter Einwirkung einer Kraft F in den feststehenden Teil 5b gedrückt und somit das Volumen des Innenraumes 6 verkleinert werden.

Bei einer in FIG 3 gezeigten mit 1c bezeichneten, dritten Ausführungsform einer erfindungsgemäßen Vorrichtung ist bei gleich bleibendem Volumen des Innenraumes 6 und gleich bleibender Menge des Fluids 8 in dem Innenraum 6 zur Druckerhöhung die Temperatur des Fluids in dem Innenraum 6 erhöhbar. Hierzu weist die Vorrichtung eine plattenförmige Heizeinrichtung 12 auf, durch die der Innenraum 6 und somit auch das Fluid 8 auf eine gewünschte Temperatur aufheizbar sind.

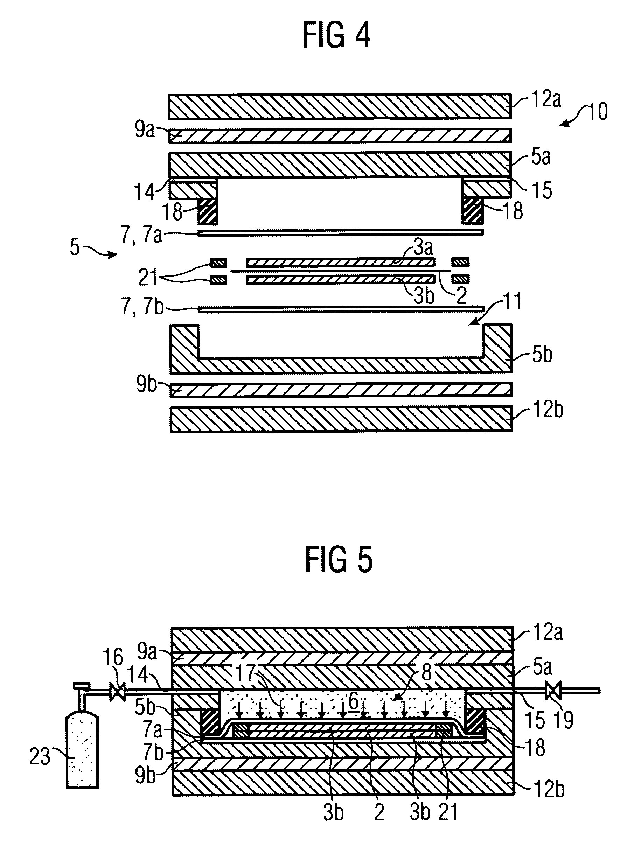

FIG 4 zeigt eine Explosionsdarstellung einer mit 10 bezeichneten besonders vorteilhaften Ausführungsform einer erfindungsgemäßen Vorrichtung. Die Vorrichtung 10 weist ein Druckgefäß 5 auf, das durch zwei im Wesentlichen parallel zueinander angeordnete Platten 5a und 5b gebildet wird, die, wenn aufeinander gelegt (siehe FIG 5), zwischen sich einen Innenraum mit einer Aufnahme 11 für die Membran 2 und die beidseitig anliegenden Elektroden 3a, 3b ausbilden. Die Platte 5a weist an ihren Berührungsflächen mit der Platte 5b zur Abdichtung Dichtungselemente 18 auf. Als Fluid wird Druckluft verwendet, die einfach und kostengünstig erzeugbar und speicherbar ist. Die Platte 5a weist einen Zufuhrkanal 14 zur Zufuhr der Druckluft in den Innenraum 6 und einen Abfuhrkanal 15 zur Abfuhr der Druckluft aus dem Innenraum 6 auf.

FIG 5 zeigt die Vorrichtung 10 von FIG 4 in zusammengebauten Zustand bei Durchführung des erfindungsgemäßen Verfahrens. Die Membran 2 und die beidseitig anliegenden Elektroden 3a, 3b sind, von einem elastischen Zwischenelement 7 vollständig umschlossen, derart in dem Innenraum 6 anordenbar, dass die Druckluft 8 über das Zwischenelement 7 die Elektrode 3a berührt. Das elastische Zwischenelement 7, bestehend aus zwei Silikonplatten 7a, 7b, soll ein Eindringen der Druckluft in die Elektroden 3a, 3b und die Membran 2 verhindern und ist deshalb luftdicht. Die Silikonplatte 7a berührt die Elektrode 3a und die Silikonplatte 7b berührt die Elektrode 3b, wobei die Silikonplatten 7a, 7b an ihren jeweiligen Rändern die Elektroden 3a, 3b etwas überragen. Die Elektroden 3a, 3b sind jeweils von einem Teflon-Rahmen gleicher Dicke wie die Elektroden umfasst, der eine seitliche Verformung der Membran 2 unter Druck- und Wärmeeinwirkung verhindern soll.

Zur Beheizung des Innenraumes 6 des Druckgefäßes 7 weist die Vorrichtung 10 eine Heizeinrichtung 9 auf, die zwei Heizplatten 9a, 9b umfasst. Eine obere Heizplatte 9a ist in thermischen Kontakt mit der oberen Platte 5a des Druckgefäßes 5 und eine untere Heizplatte 9b ist in thermischen Kontakt mit der unteren Platte 5b des Druckgefäßes 5.

Weiterhin weist die Vorrichtung 10 eine nur andeutungsweise dargestellte Pressvorrichtung zum Zusammenpressen der beiden Platten 5a, 5b zum gasdichten Abschließen des Innenraumes 6 auf. Die Pressvorrichtung weist eine an der oberen Heizplatte 9a anliegende obere Pressplatte 12a und eine an der unteren Heizplatte 9b anliegende untere Pressplatte 12b auf.

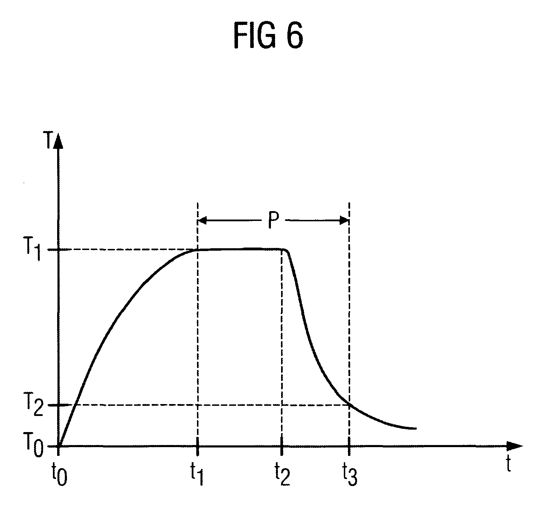

Zur Herstellung einer dauerhaften Verbindung zwischen den Elektroden 3a, 3b und der Membran 2 werden, wie in FIG 6 veranschaulicht, in einem ersten Schritt - zunächst ohne Membran und Elektroden in dem Innenraum 6 - durch Zusammenpressen der Pressplatten 12a und 12b die beiden Platten 5a und 5b des Druckgefäß 5 geschlossen und der Innenraum 6 mit Hilfe der Heizplatten 9a und 9b von einer Anfangstemperatur T0 zu einem Zeitpunkt t0 auf eine vordefinierte Verbindungstemperatur T1 aufgeheizt. Bei Erreichen der Verbindungstemperatur T1 zum Zeitpunkt t1 wird das Druckgefäß 5 geöffnet und - wie in FIG 5 dargestellt - die Membran 2 mit beidseitig je einer anliegenden Elektrode 3a bzw. 3b und je einer anliegenden Silikonplatte 7a bzw. 7b in die Aufnahme 11 des Innenraumes 6 eingelegt. Anschließend werden mit Hilfe der Pressplatten 12a und 12b die beiden Platten 5a und 5b des Druckgefäßes 5 aufeinandergepresst und somit der Innenraum 6 luftdicht verschlossen. Die Dichtungen 18 drücken hierbei die Silikonplatten 7a und 7b in ihrer Peripherie derart aufeinander, dass sie eine luftdichte Hülle um die Membran 2 und die Elektroden 3a, 3b bilden. Durch Aufwärmung der bereits in dem Innenraum 6 befindlichen Luft wird der Druck in dem Innenraum 6 bereits etwas erhöht.

Im nächsten Schritt wird durch Öffnen des Ventils 16 Druckluft aus dem Druckluftreservoir 23 über den Zufuhrkanal 14 in den Innenraum 6 geleitet und somit der Druck der Luft im Innenraum 6 bis auf einen vordefinierten Verbindungsdruck P erhöht. Der Verbindungsdruck P breitet sich gleichmäßig über den gesamten Innenraum 6 aus, so dass die Presskraft 17 gleichmäßig über die gesamte Oberfläche der Elektrode 3a auf die Membran 2 und die Elektrode 3b wirkt. Die Druckerhöhung im Innenraum 6 erzeugt somit eine homogene Pressbewegung, durch die die Elektroden 3a, 3b und die Membran 2 homogen zusammengepresst werden.

Die Druckluft 8 wird durch die aufgeheizten Platten 5a, 5b aufgeheizt und leitet die Wärme wiederum an die Membran 2 und die Elektroden 3a, 3b weiter. Durch die Wärmeübertragung über die Druckluft 8 ist eine gleichmäßige Temperaturverteilung über die Oberfläche der Elektrode 3a möglich.

Aufgrund der homogenen Druck- und Temperatureinwirkung ist eine besonders homogene Verbindung der Membran 2 mit den anliegenden Elektroden 3a, 3b möglich.

Während der Einwirkung des Verbindungsdruckes P bis zum Zeitpunkt t3 wird die Temperatur zuerst für eine vordefinierte Zeit bis zum Zeitpunkt t2 konstant bei der Verbindungstemperatur T1 gehalten und anschließend durch Wegnahme der Wärmezufuhr die Abkühlung eingeleitet. Nach Abkühlen des Druckgefäßes 5 auf eine vordefinierte Endtemperatur T2 im Zeitpunkt t3 wird durch Öffnen des Ventils 19 die Druckluft 8 über den Abfuhrkanal 15 aus dem Innenraum 6 abgeführt und somit die Druckeinwirkung beendet. Anschließend kann das Druckgefäß 5 geöffnet und die nunmehr verbundene Membran-Elektrodeneineit, d.h. die Membran 2 und die mit ihr verbundenen Elektroden 3a, 3b, aus dem Innenraum 6 entnommen werden. Die Membran 3 ist nun dauerhaft, d.h. für die gesamte Lebenszeit der Membran-Elektroden-Einheit, und untrennbar mit den Elektroden 3a, 3b verbunden.

Bei Verwendung üblicher kommerziell erhältlicher Membrane (wie z.B. Nafion® N-115 des Herstellers DuPont oder vergleichbare Membrane) konnte eine besonders gute Verbindung zwischen der Membran und zwei anliegenden Elektroden mit T1 = 175° bis 195°C und P = 16 bis 23 bar, insbesondere P = 18 bis 21 bar, erzielt werden.

## Patentansprüche

1. Verfahren zur Herstellung einer Membran-Elektroden-Einheit mit einer dauerhaften Verbindung einer Polymer-Elektrolyt-Membran (2) mit zumindest einer Gasdiffusionselektrode (3a bzw. 3b), wobei zum dauerhaften Verbinden ein Zusammenpressen der Membran (2) und der Gasdiffusionselektrode (3a bzw. 3b) durch Einwirkung eines äußeren Druckes erfolgt,
**dadurch gekennzeichnet, dass** zum Erzeugen der Pressbewegung der Druck eines Fluids (8) erhöht wird, wobei das Fluid (8) die Membran (2) und/oder die Gasdiffusionselektrode(n) unmittelbar oder über ein elastisches Zwischenelement (7) berührt.

2. Verfahren nach Anspruch 1,
**dadurch gekennzeichnet, dass** zum dauerhaften Verbinden die Membran (2) und die zumindest eine Gasdiffusionselektrode (3a bzw. 3b), vorzugsweise über das Fluid (8), erwärmt werden.

3. Verfahren nach einem der vorhergehenden Ansprüche,
**dadurch gekennzeichnet, dass** das Zusammenpressen der Membran (2) und der zumindest einen Gasdiffusionselektrode (3a bzw. 3b) in einem mit dem Fluid (8) gefüllten Raum (6) erfolgt, wobei zur Druckerhöhung des Fluids (8) die Menge des Fluids (8) in dem Raum erhöht wird.

4. Verfahren nach einem der vorhergehenden Ansprüche,
**dadurch gekennzeichnet, dass** das Zusammenpressen der Membran (2) und der zumindest einen Gasditfusionselektrode (3a bzw. 3b) in einem mit dem Fluid (8) gefüllten Raum (6) erfolgt, wobei zur Druckerhöhung des Fluids (8) das Volumen des Raumes (6) verkleinert wird.

5. Verfahren nach einem der vorhergehenden Ansprüche,
**dadurch gekennzeichnet, dass** das Zusammenpresaen der Membran (2) und der zumindest einen Gasdiffusionselektrode (3a bzw. 3b) in einem mit dem Fluid (8) gefüllten Raum (6) erfolgt, wobei zur Druckerhöhung des Fluids (8) die Temperatur des Fluids (8) in dem Raum (6) erhöht wird.

6. Verfahren nach einem der vorhergehenden Ansprüche,
**dadurch gekennzeichnet, dass** das elastische Zwischenelement (7) die Membran (2) und die zumindest eine Gasdiffusionselektrode (3a bzw. 3b) vollständig umschließt.

7. verfahren nach einem der vorhergehenden Ansprüche,
**dadurch gekennzeichnet, dass** das elastische Zwischenelement (7) aus Silikon besteht.

8. Verfahren nach einem der vorhergehenden Ansprüche,
**dadurch gekennzeichnet, dass** das elastische Zwischenelement (7) eine Shore Härte A im Bereich von 50 bis 70, vorzugsweise 60 aufweist.

9. Verfahren nach einem der vorhergehenden Ansprüche,
**dadurch gekennzeichnet , dass** Druckluft als Fluid (8) benutzt wird.

10. Vorrichtung (1a-c, 10) zur Durchführung des Verfahrens nach einem der vorgehenden Ansprüche umfassend einen Raum (6), in dem eine Polymer-Elektrolyt-Membran (2) mit zumindest einer anliegenden Gasdiffusionselektrode (3a bzw. 3b) anordenbar ist und der mit einem Fluid (8) derart befüllbar ist, dass das Fluid (8) die Membran (2) mit der zumindest einen anliegenden Elektrode (3a bzw. 3b) unmittelbar oder über ein elastisches Zwischenelement (7) berührt, wobei zum zusammenpressen der Membran (2) und der zumindest einen Elektrode (3a bzw. 3b) der Druck des Fluids (8) in dem Raum (6) erhöhbar ist.

11. Vorrichtung (1a-c, 10) nach Anspruch 10,
**dadurch gekennzeichnet , dass** zur Druckerhöhung des Fluids (8) in dem Raum (6) die Menge des Fluids (8) in dem Raum (6) vergrößerbar ist.

12. Vorrichtung (1a-c, 10) nach einem der Ansprüche 10 oder 11, **dadurch gekennzeichnet , dass** zur Druckerhöhung des Fluids (8) in dem Raum (6) das Volumen des Raumes (6) verkleinerbar ist.

13. Vorrichtung (1a-c, 10) nach einem der Ansprüche 10 bis 12, **dadurch gekennzeichnet , dass** zur Druckerhöhung des Fluids (8) die Temperatur des Fluids (8) in dem Raum (6) vergrößerbar ist.

14. Vorrichtung (1a-c, 10) nach Anspruch 10,
**gekennzeichnet durch** zwei im wesentlichen parallel zueinander angeordnete Platten (7a, 7b), die zwischen sich den Raum (6) ausbilden.

15. Vorrichtung (1a-c, 10) nach Anspruche 14,
**gekennzeichnet durch** eine Pressvorrichtung (12) zum Zusammenpressen der beiden Platten (7a, 7b) zum fluiddichten Abschließen des Raumes (6).

16. Vorrichtung (1a-c, 10) nach einem der Ansprüche 10 bis 15, **dadurch gekennzeichnet dass** das elastische Zwischenelement (7) die Membran (2) und die zumindest eine Gasdiffusionselektrode (3a bzw. 3b) vollständig umschließt.

17. Vorrichtung (1a-c, 10) nach einem der Ansprüche 10 bis 16, **dadurch gekennzeichnet , dass** das elastische Zwischenelement (7) aus Silikon besteht.

18. Vorrichtung (1a-c, 10) nach Anspruch 17,
**dadurch gekennzeichnet, dass** das elastische Zwischenelement (7) zwei Silikonplatten (7a, 7b) umfasst.

19. Vorrichtung (1a-c, 10) nach einem der Ansprüche 10 bis 18, **dadurch gekennzeichnet, dass** das elastische Zwischenelement (7) eine Shore Härte A im Bereich von 50 bis 70, vorzugsweise 60 aufweist.

20. Vorrichtung (1a-c, 10) nach einem der Ansprüche 10 bis 18, **dadurch gekennzeichnet, dass** sie eine Heizeinrichtung zur Beheizung des Raumes (6) aufweist.

## Claims

1. Method for producing a membrane electrode assembly having permanent bonding of a polymer electrolyte membrane (2) to at least one gas diffusion electrode (3a or 3b), the membrane (2) and the gas diffusion electrode (3a or 3b) being pressed together by the application of an external pressure to provide permanent bonding,
**characterised in that**, to produce the pressing movement, the pressure of a fluid (8) is increased, the fluid (8) being in contact with the membrane (2) and/or the gas diffusion electrode(s) either directly or via an elastic intermediate element (7).

2. Method according to claim 1,
**characterised in that**, to provide permanent bonding, the membrane (2) and the at least one gas diffusion electrode (3a or 3b) are heated, preferably via the fluid (8).

3. Method according to one of the preceding claims,
**characterised in that** the pressing together of the membrane (2) and the at least one gas diffusion electrode (3a or 3b) takes place in a chamber (6) filled with the fluid (8), the quantity of fluid (8) in the chamber being increased to increase the pressure of the fluid (8).

4. Method according to one of the preceding claims,
**characterised in that** the pressing together of the membrane (2) and the at least one gas diffusion electrode (3a or 3b) takes place in a chamber (6) filled with the fluid (8), the volume of the chamber (6) being reduced to increase the pressure of the fluid (8).

5. Method according to one of the preceding claims,
**characterised in that** the pressing together of the membrane (2) and the at least one gas diffusion electrode (3a or 3b) takes place in a chamber (6) filled with the fluid (8), the temperature of the fluid (8) in the chamber (6) being increased to increase the pressure of the fluid (8).

6. Method according to one of the preceding claims,
**characterised in that** the elastic intermediate element (7) completely encloses the membrane (2) and the at least one gas diffusion electrode (3a or 3b).

7. Method according to one of the preceding claims,
**characterised in that** the elastic intermediate element (7) is made of silicone.

8. Method according to one of the preceding claims,
**characterised in that** the elastic intermediate element (7) has a Shore hardness A in the range 50 to 70, preferably 60.

9. Method according to one of the preceding claims,
**characterised in that** compressed air is used as the fluid (8).

10. Device (1a-c, 10) for carrying out the method according to one of the preceding claims, comprising a chamber (6) in which a polymer electrolyte membrane (2) with at least one adjacent gas diffusion electrode (3a or 3b) can be disposed and which can be filled with a fluid (8) in such a way that the fluid (8) is in contact with the membrane (2) with the at least one adjacent electrode (3a or 3b) either directly or via an elastic intermediate element (7), it being possible to increase the pressure of the fluid (8) in the chamber (6) to press together the membrane (2) and the at least one electrode (3a or 3b).

11. Device (1a-c, 13) according to claim 10,
**characterised in that** the quantity of fluid (8) in the chamber (6) can be increased to increase the pressure of the fluid (8) in the chamber (6).

12. Device (1a-c, 10) according to one of claims 10 or 11,
**characterised in that** the volume of the chamber (6) can be reduced to increase the pressure of the fluid (8) in the chamber (6) .

13. Device (1a-c, 10) according to one of claims 10 to 12,
**characterised in that** the temperature of the fluid (8) in the chamber (6) can be increased to increase the pressure of the fluid (8).

14. Device (1a-c, 10) according to claim 10,
**characterised by** two plates (7a, 7b) disposed essentially parallel to one another which between them form the chamber (6).

15. Device (1a-c, 10) according to claim 14,
**characterised by** a pressing apparatus (12) for pressing together the two plates (7a, 7b) to seal the chamber (6) in a fluid-tight manner.

16. Device (1a-c, 10) according to one of claims 10 to 15,
**characterised in that** the elastic intermediate element (7) completely encloses the membrane (2) and the at least one gas diffusion electrode (3a or 3b).

17. Device (1a-c, 10) according to one of claims 10 to 16,
**characterised in that** the elastic intermediate element (7) is made of silicone.

18. Device (1a-c, 14) according to claim 17,
**characterised in that** the elastic intermediate element (7) comprises two silicone plates (7a, 7b).

19. Device (1a-c, 10) according to one of claims 10 to 18,
**characterised in that** the elastic intermediate element (7) has a Shore hardness A in the range 50 to 70, preferably 60.

20. Device (1a-c, 10) according to one of claims 10 to 18,
**characterised in that** it has a heater for heating the chamber (6) .

## Revendications

1. Procédé de fabrication d'une unité membrane-électrode ayant une liaison durable d'une membrane ( 2 ) polymère-électrolyte avec au moins une électrode ( 3a ou 3b ) de diffusion de gaz, dans lequel, pour la liaison durable, on presse ensemble la membrane ( 2 ) et l'électrode ( 3a ou 3b ) de diffusion de gaz en faisant agir une pression extérieure,
**caractérisé en ce que**, pour la production du mouvement de pression, on augmente la pression d'un fluide ( 8 ), le fluide touchant la membrane ( 2 ) et/ou la ou les électrode (s) de diffusion de gaz directement ou par l'intermédiaire d'un élément ( 7 ) intermédiaire élastique.

2. Procédé suivant la revendication 1,
**caractérisé en ce que**, pour la liaison durable, on réchauffe la membrane ( 2 ) et la au moins une électrode ( 3a ou 3b ) de diffusion de gaz, de préférence par la fluide ( 8 ).

3. Procédé suivant l'une des revendications précédentes,
**caractérisé en ce que** l'on presse ensemble la membrane ( 2 ) et la au moins une électrode ( 3a ou 3b ) de diffusion de gaz dans une chambre ( 6 ) emplie du fluide ( 8 ), la quantité du fluide dans la chambre étant augmentée pour augmenter la pression du fluide ( 8 ).

4. Procédé suivant l'une des revendications précédentes,
**caractérisé en ce que** l'on presse ensemble la membrane ( 2 ) et la au moins une électrode ( 3a ou 3b ) de diffusion de gaz dans une chambre ( 6 ) emplie du fluide ( 8 ), le volume de la chambre ( 6 ) étant diminué pour augmenter la pression du fluide ( 8 ).

5. Procédé suivant l'une des revendications précédentes,
**caractérisé en ce que** l'on presse ensemble la membrane ( 2 ) et la au moins une électrode ( 3a ou 3b ) de diffusion de gaz dans une chambre ( 6 ) emplie du fluide ( 8 ), la température du fluide ( 8 ) dans la chambre ( 6 ) étant élevée pour augmenter la pression du fluide ( 8 ).

6. Procédé suivant l'une des revendications précédentes,
**caractérisé en ce que** l'élément ( 7 ) intermédiaire élastique entoure complètement la membrane ( 2 ) et la au moins une électrode ( 3a ou 3b ) de diffusion de gaz.

7. Procédé suivant l'une des revendications précédentes,
**caractérisé en ce que** l'élément ( 7 ) intermédiaire élastique est en silicone.

8. Procédé suivant l'une des revendications précédentes,
**caractérisé en ce que** l'élément ( 7 ) intermédiaire élastique a une dureté shore A, comprise entre 50 et 70, de préférence de 60.

9. Procédé suivant l'une des revendications précédentes,
**caractérisé en ce que** l'on utilise de l'air comprimé comme fluide ( 8 ).

10. dispositif ( 1a-c, 10 ) pour la mise en oeuvre du procédé suivant l'une des revendications précédentes, comprenant une chambre ( 6 ), dans laquelle une membrane ( 2 ) polymère-électrolyte, ayant au moins une électrode ( 3a ou 3b ) de diffusion de gaz qui y est appliquée, peut être disposée et qui peut être emplie d'un fluide ( 8 ), de manière à ce que le fluide ( 8 ) touche, directement ou par un élément ( 7 ) intermédiaire élastique, la membrane ( 2 ) avec la au moins une électrode ( 3a ou 3b ) qui s'y applique, la pression du fluide ( 8 ) dans la chambre ( 6 ) pouvant être augmentée pour presser ensemble la membrane ( 2 ) et la au moins une électrode ( 3a ou 3b ).

11. Dispositif ( 1a-c, 10 ) suivant la revendication 10,
**caractérisé en ce que**, pour augmenter la pression du fluide ( 8 ) dans la chambre ( 6 ), la quantité du fluide ( 8 ) dans la chambre ( 6 ) peut être augmentée.

12. Dispositif ( 1a-c, 10 ) suivant l'une des revendications 10 ou 11, **caractérisé en ce que**, pour augmenter la pression du fluide ( 8 ) dans la chambre ( 6 ), le volume de la chambre ( 6 ) peut être diminué.

13. Dispositif ( 1a-c, 10 ) suivant l'une des revendications 10 ou 12, **caractérisé en ce que**, pour augmenter la pression du fluide ( 6 ), la température du fluide ( 8 ) dans la chambre ( 6 ) peut être élevée.

14. dispositif ( 1a-c, 10 ) suivant la revendication 10,
**caractérisé par** deux plaques ( 7a, 7b ), sensiblement parallèles l'une à l'autre, qui forment entre elles la chambre ( 6 ).

15. Dispositif ( 1a-c, 10 ) suivant la revendication 14,
**caractérisé par** un dispositif ( 12 ) pour presser ensemble les deux plaques ( 7a, 7b ) afin de fermer fluidiquement la chambre ( 6 ).

16. Dispositif ( 1a-c, 10 ) suivant l'une des revendications 10 à 15, **caractérisé en ce que** l'élément ( 7 ) intermédiaire élastique entoure complètement la membrane ( 2 ) et la au moins une électrode ( 3a ou 3b ) de diffusion de gaz.

17. Dispositif ( 1a-c, 10 ) suivant l'une des revendications 10 à 16, **caractérisé en ce que** l'élément ( 7 ) intermédiaire élastique est en silicone.

18. Dispositif ( 1a-c, 10 ) suivant la revendication 17,
**caractérisé en ce que** l'élément ( 7 ) intermédiaire élastique comprend deux plaques ( 7a, 7b ) de silicone.

19. Dispositif ( 1a-c, 10 ) suivant l'une des revendications 10 à 18, **caractérisé en ce que** l'élément ( 7 ) intermédiaire élastique a une dureté shore A, comprise entre 50 et 70, de préférence de 60.

20. Dispositif ( 1a-c, 10 ) suivant l'une des revendications 10 à 18, **caractérisé en ce qu'**il comporte un dispositif de chauffage pour chauffer la chambre ( 6 ).
